# EUROPÄISCHE PATENTSCHRIFT

(11) **EP 3 043 909 B1**
(45) Veröffentlichungstag und Bekanntmachung des Hinweises auf die Patenterteilung: **19.12.2018**
(21) Anmeldenummer: 14758531.9
(22) Anmeldetag: 29.08.2014
(51) Int. Cl.: B01L 3/00, B29C 59/00, B29C 59/02

(54) **MIKROFLUIDIKANALYSE-BAUELEMENT UND HERSTELLUNGSVERFAHREN**
MICROFLUIDIC ANALYSIS COMPONENT AND PRODUCTION METHOD
COMPOSANT POUR ANALYSE MICROFLUIDIQUE ET PROCÉDÉ DE FABRICATION

(30) Priorität: 09.09.2013 DE 102013217959
(43) Veröffentlichungstag der Anmeldung: 20.07.2016
(73) Patentinhaber: Efficient Robotics GmbH, 70806 Kornwestheim (DE)
(72) Erfinder: KOLTERMANN, Alois, 28857 Syke (DE)
(74) Vertreter: Patentanwälte Ruff, Wilhelm, Beier, Dauster & Partner mbB
(86) Internationale Anmeldenummer: PCT/EP2014/068405
(87) Internationale Veröffentlichungsnummer: WO 2015/032701

(56) Entgegenhaltungen:
- DE-A1-102005 061 629
- US-A1- 2002 142 471
- US-A1- 2004 005 582
- US-A1- 2006 182 738
- US-A1- 2013 190 212

## Beschreibung

Die Erfindung bezieht sich auf ein Mikrofluidikanalyse-Bauelement, das ein Kapillarsubstrat, ein Deckelsubstrat angrenzend an eine Deckelseite des Kapillarsubstrats und/oder ein Bodensubstrat angrenzend an eine Bodenseite des Kapillarsubstrats, eine Kapillarstruktur mit mindestens einer einen Hohlkanal bildenden Kapillare im Inneren des Kapillarsubstrats und/oder an der Grenzfläche des Kapillarsubstrats mit dem Deckelsubstrat und/oder an der Grenzfläche des Kapillarsubstrats mit dem Bodensubstrat sowie Fluidführungsmittel zum Durchführen eines Fluids durch die Kapillarstruktur umfasst, und auf ein zugehöriges Herstellungsverfahren.

In der chemischen, biologischen und pharmazeutischen Industrie sind sogenannte Hochdurchsatzanalyseanlagen in Gebrauch, mit denen sich bis zu 100.000 Analysen pro Tag durch eine automatisierte Kombination und Verkettung von Verarbeitungsstationen durchführen lassen. Diese Stationen dienen dem Handhaben, Dispensen, Mixen, Analysieren, Inkubieren und/oder Selektieren von Proben. Solche Anlagen sind allerdings typischerweise mit relativ hohen Anschaffungs- und Unterhaltungskosten, einem hohen Platzbedarf, einem hohen Verbrauch an Reagenzien und einem personalintensiven Betrieb verbunden. Um hier Verbesserungen zu erzielen, gibt es zunehmend Bestrebungen, Teile dieser Analyseprozesskette durch Tropfenhandhabung in Mikrofluidstrukturen zu ersetzen. Diese Systeme enthalten Kapillarstrukturen, die physikalisch oder chemisch in ein Grundmaterial wie Glas oder Silizium geätzt werden.

In dem Zeitschriftenaufsatz H. M. Joensson und H. Andersson Svahn, Droplet Micofluidics - A Tool for Single-Cell Analysis, Angew. Chem. Int. Ed. 2012, 51, S. 12176-12192 wird ein solches Mikrofluidik-Kapillarsystem beschrieben, dessen Funktionselemente passiv mittels partieller Druckunterschiede und speziellen Kapillargeometrien in engen Prozessfenstern betrieben werden. Komplexe Prozessabläufe wie kurzzeitiges Anhalten von Fluidströmen, volumengeregeltes Beimischen von Fluiden oder gezieltes Vereinzeln von Teilströmen sind mit dieser Technik nicht möglich.

Solchen Mikrofluidik-Kapillarsystemen kann eine optische Sensorik beispielsweise zur Fluoreszenzmessung zugeordnet sein, die sich herkömmlicherweise außerhalb des Kapillarsystems befindet, siehe beispielsweise den Konferenzbeitrag Agresti et al., Ultrahigh-througput screening in drop-based microfluidics for directed evolution (Supporting information), Proc. of the Nat. Acad. of Science of the United States of America (PNAS), Band 107, Nr. 9 (2010), S. 4004-4009. Diese Anordnung ermöglicht allerdings keine direkte Analyse von Fluiden mittels direktem Kontakt der optischen Sensorik zum Fluid und führen somit zu einer schlechteren Detektion und einem hohen apparativen Aufwand.

Verschiedene weitere herkömmliche Mikrofluidikanalyse-Bauelemente und zugehörige Herstellungsverfahren sind in den Offenlegungsschriften US 200210142471 A1, DE 10 2005 061 629 A1, US 2006/0182738 A1, US 2004/0005582 A1 und US 2013/0190212 A1 offenbart.

In den herkömmlichen Mikrofluidikanalyse-Bauelementen sind zudem elektrische Analysen des Fluids innerhalb der Kapillaren fertigungsbedingt meist nicht realisierbar. Aufgrund der Materialsensitivität von verwendeten chemischen oder physikalischen Ätzverfahren ist meist auch eine Strukturierung von Kapillarsystem, Sensoren und Aktoren unterschiedlicher Materialien mit demselben Verfahren ohne wechselseitige Beeinflussung nicht möglich. Weiter ist es meist nicht möglich, Sensor- und Aktorelemente, die aus anderen Materialien als das Substratmaterial des Kapillarsystems bestehen, fluiddicht in die Kapillarwand zu integrieren bzw. zu strukturieren. Dies schränkt die Wahl der verwendbaren Sensor- und Aktorprinzipien deutlich ein.

Der Erfindung liegt als technisches Problem die Bereitstellung eines Mikrofluidikanalyse-Bauelements und eines Verfahrens zu dessen Herstellung zugrunde, mit denen sich die oben erläuterten Schwierigkeiten herkömmlicher Mikrofluidikanalyse-Bauelemente und entsprechender Herstellungsverfahren wenigstens teilweise vermeiden lassen.

Die Erfindung löst dieses Problem durch die Bereitstellung eines Mikrofluidikanalyse-Bauelements mit den Merkmalen des Anspruchs 1 sowie eines Herstellungsverfahrens mit den Merkmalen des Anspruchs 10.

Gemäß der Erfindung sind die Fluidführungsmittel des Mikrofluidikanalyse-Bauelements dafür eingerichtet, zwei nicht mischbare Fluide druckimpulsgesteuert zu kompartimentieren, indem sie an einer Einmündungsstelle, an der zwei zugehörige Kapillaren zusammengeführt sind, in aufeinanderfolgende getrennte Fluid-Fluid-Segmente geteilt werden. Es brauchen daher für diesen Zweck keine speziellen Kapillargeometrien bereitgestellt werden. Die erfindungsgemäße Fluidführung mittels gesteuerter und damit aktiv erzeugter Druckimpulse ermöglicht zudem eine deutlich bessere Fluidführung und insbesondere Fluidkompartimentierung als dies mit aufwändigen speziellen Kapillargeometrien und passiven partiellen Druckunterschieden möglich ist.

In einer Weiterbildung der Erfindung ist in das Mikrofluidikanalyse-Bauelement ein linienförmiges Sensorelement integriert, das sich zu einer Kapillare der Kapillarstruktur hin und von dieser weg erstreckt und jeweils mit einem Fluidkontaktende sowie mindestens ein angrenzender Teil von dessen Zuführung in einer gleichen, zum Kapillarsubstrat parallelen Ebene wie die Kapillare liegt. Dabei schließt das linienförmige Sensorelement mit seinen beiden Fluidkontaktenden fluchtend an einer Seitenwand der Kapillare im Kapillarsubstrat ab oder erstreckt sich in deren Hohlkanal hinein. Dies macht es möglich, dass das linienförmige Sensorelement an seinen Fluidkontaktenden im Betrieb direkt mit dem in der Kapillare strömenden Fluid in Kontakt kommt, wodurch das Sensorverhalten gegenüber außerhalb des Mikrofluidikanalyse-Bauelements angeordneten Sensoren deutlich verbessert werden kann.

In einer Weiterbildung der Erfindung ist das linienförmige Sensorelement ein optisch leitendes Drahtmaterial, z.B. ein Lichtwellenleiter, oder ein elektrisch leitendes Drahtmaterial. Dadurch lassen sich in gewünschter Weise optische und/oder elektrische Sensoren für die Fluidanalyse in einer in das Mikrofluidikanalyse-Bauelement integrierten Form bereitstellen.

In einer Weiterbildung der Erfindung ist das Fluidführungsmittel zur Bereitstellung der Druckimpulse mit Drücken bis zu 10bar und Impulsbreiten zwischen 1µs und 10s eingerichtet. Dies ermöglicht insbesondere eine zuverlässige Kompartimentierung des Fluids mit hoher Durchsatzleistung, d.h. hoher Anzahl von Fluidkompartimenten bzw. Fluidsegmenten pro Zeiteinheit.

In einer Weiterbildung der Erfindung weisen die Fluidführungsmittel ein oder mehrere in das Deckelsubstrat und/oder in das Bodensubstrat integrierte, ansteuerbare Ventile zum Öffnen und Schließen einer jeweiligen Kapillare der Kapillarstruktur auf. Somit sind dann auch solche die Fluidführung steuernden Ventile in das Mikrofluidikanalyse-Bauelement integriert.

In vorteilhafter Weiterbildung der Erfindung umfasst das Mikrofluidikanalyse-Bauelement mindestens zwei Module aus der Gruppe, die aus einem Kompartimentierungsmodul, einem Fluidzumischungsmodul, einem Inkubatormodul, einem Fluidanalysemodul und einem Selektionsmodul besteht. Dadurch lässt sich eine baulich kompakte Zusammenfassung zweier oder mehrerer solcher Module im dem Mikrofluidikanalyse-Bauelement als einem einzelnen Bauteil erzielen.

In einer Weiterbildung der Erfindung weist das Mikrofluidikanalyse-Bauelement ein Kompartimentierungsmodul und/oder ein Fluidzumischungsmodul mit einer ersten Kapillare und einer in diese unter einem spitzen Winkel mündenden zweiten Kapillare auf, und die Fluidführungsmittel sind zum druckgesteuerten Führen eines ersten Fluids in der ersten Kapillare und eines zweiten Fluids in der zweiten Kapillare eingerichtet. Dadurch können die beiden Fluide sehr exakt und mit hoher Taktrate in Form einzelner Fluidsegmente kompartimentiert oder zu einem Mischfluid zusammengebracht werden.

In einer Weiterbildung der Erfindung weist das Mikrofluidikanalyse-Bauelement ein Selektionsmodul mit einer Analysefluidkapillare und einer diese kreuzenden Selektionsfluidkapillare auf, und die Fluidführungsmittel sind zum selektiven Auskoppeln von einzelnen Analysefluidsegmenten aus der Analysefluidkapillare durch entsprechendes druckgesteuertes Führen eines Selektionsfluids in der Selektionsfluidkapillare eingerichtet. Dies ermöglicht die gezielte Abtrennung einzelner Analysefluidsegmente aus einem segmentierten Analysefluidstrom mittels geeigneter aktiver Druckimpulse auf das Selektionsfluid.

In einer Weiterbildung der Erfindung weist das Mikrofluidikanalyse-Bauelement eine oder mehrere magnetische Spulen als ein jeweiliger Sensor oder Aktor auf, wobei die Spule in oder am Kapillarsubstrat integriert ist. Durch Verwenden einer solchen magnetischen Spule sowie magnetischer Partikel im in der Kapillare geführten Fluid lassen sich z.B. die Strömungsverhältnisse und Prozessbedingungen innerhalb der Kapillarstruktur in einer gewünschten Weise steuern bzw. kontrollieren.

Mit dem erfindungsgemäßen Verfahren lässt sich ein Mikrofluidikanalyse-Bauelement gemäß der Erfindung vorteilhaft derart herstellen, dass wenigstens eine Kapillare der Kapillarstruktur durch einen spanenden Bearbeitungsschritt des Kapillarsubstrats und/oder des Deckelsubstrats und/oder des Bodensubstrats gebildet wird. Dies stellt sich gegenüber anderen herkömmlichen Kapillarstrukturerzeugungstechniken als vorteilhaft heraus, insbesondere hinsichtlich Aufwand und Flexibilität der verwendbaren Materialien.

In einer Ausgestaltung des erfindungsgemäßen Verfahrens wird mit dem Bilden der Kapillarstruktur durch den spanenden Bearbeitungsschritt ein zuvor gebildetes, die Kapillare kreuzendes oder in diese hineinragendes, linienförmiges Sensorelement im Bereich der Kapillare aufgetrennt oder einseitig strukturiert, d.h. abgetrennt. Dadurch kann sehr zuverlässig ein Sensorelement bereitgestellt werden, dessen Fluidkontaktende fluchtend mit der Seitenwand der Kapillare abschließt oder sich in deren Hohlkanal hinein erstreckt und auf diese Weise im Betrieb direkt mit dem durchgeführten Fluid in Kontakt kommen kann.

Vorteilhafte Ausführungsformen der Erfindung sind in den Zeichnungen dargestellt und werden nachfolgend beschrieben. Hierbei zeigen:
- Fig. 1: ein Blockdiagramm einer Mikrofluidikanalyseanlage mit einem Mikrofluidikanalyse-Bauelement,
- Fig. 2: eine schematische Detailschnittansicht durch einen Schichtaufbau eines in der Anlage von Fig. 1 verwendbaren Mikrofluidikanalyse-Bauelement mit dreidimensionalem Kapillarsystem,
- Fig. 3: eine ausschnittweise schematische Draufsicht auf das Mikrofluidikanalyse-Bauelement längs einer Linie III-III von Fig. 2,
- Fig. 4: eine schematische Draufsicht auf ein Kapillarsystem eines Kompartimentierungsteils eines Mikrofluidikanalyse-Bauelements,
- Fig. 5: eine schematische Draufsicht auf einen Funktionsteil zur optischen Fluidanalyse eines Mikrofluidikanalyse-Bauelements,
- Fig. 6: eine Schnittansicht längs einer Linie VI-VI von Fig. 5,
- Fig. 7: eine schematische Draufsicht auf einen Funktionsteil zur Fluidzumischung eines Mikrofluidikanalyse-Bauelements,
- Fig. 8: eine schematische Draufsicht auf ein Inkubationsmodul für ein Mikrofluidikanalyse-Bauelement,
- Fig. 9: eine schematische Draufsicht eines Funktionsteils zur Fluidselektion eines Mikrofluidikanalyse-Bauelements,
- Fig. 10: eine schematische Darstellung eines Speicherbehälters zur ungeordneten Speicherung selektierter Fluidsegmente für ein Mikrofluidikanalyse-Bauelement,
- Fig. 11: eine schematische Darstellung eines Schlauchspeichers zur geordneten Speicherung selektierter Fluidsegmente für ein Mikrofluidikanalyse-Bauelement,
- Fig. 12: eine schematische Draufsicht auf einen Funktionsteil zur Strömungs-/Prozesssteuerung einer Kapillarstruktur eines Mikrofluidikanalyse-Bauelements,
- Fig. 13: eine Schnittansicht längs einer Linie XIII-XIII von Fig. 12,
- Fig. 14: eine schematische Schnittansicht eines Kapillarstrukturteils eines Mikrofluidikanalyse-Bauelements mit integriertem Sensorelement,
- Fig. 15: eine schematische Draufsicht auf einen Funktionsteil eines Mikrofluidikanalyse-Bauelements mit integriertem Strömungssteuerventil für eine Kapillarstruktur,
- Fig. 16: eine Schnittansicht längs einer Linie XVI-XVI von Fig. 15 bei geöffnetem Ventil,
- Fig. 17: die Schnittansicht von Fig. 16 bei geschlossenem Ventil und
- Fig. 18: eine schematische Draufsicht auf ein Mikrofluidikanalyse-Bauelement mit integrierten Modulen zur Kompartimentierung, Fluidzumischung, Segmentanalyse und Segmentselektion.

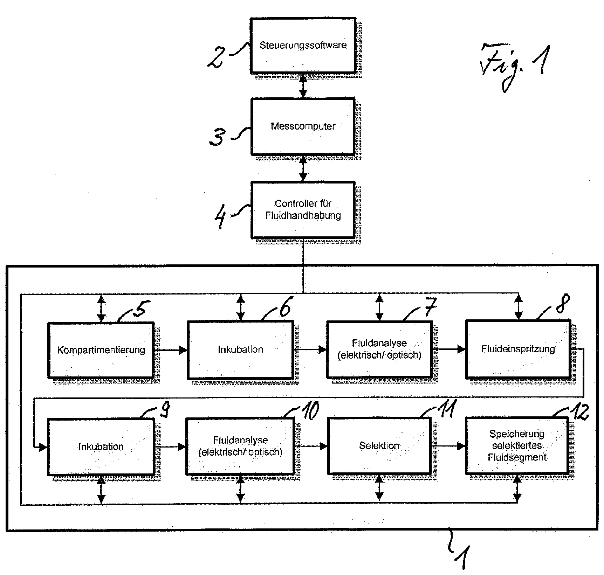

Mit der in Fig. 1 schematisch dargestellten Mikrofluidikanalyseanlage lassen sich Hochdurchsatzanalysen für bis zu 107 Analysen pro Tag führen. Die Anlage umfasst einen Mikroreaktorteil 1, dem eine Steuerung zugeordnet ist, die im gezeigten Beispiel eine Rechnereinheit mit Steuerungssoftware 2, einen Messcomputer 3 und eine Steuereinheit zur Fluidhandhabung 4 umfasst. Der Mikroreaktorteil 1 beinhaltet im gezeigten Beispiel als Funktionsmodule einen Kompartimentierungsblock 5, einen ersten Inkubationsblock 6, einen ersten Fluidanalyseblock 7, einen Fluideinspritzungs- bzw. Fluidzumischungsblock 8, einen zweiten Inkubationsblock 9, einen zweiten Fluidanalyseblock 10, einen Selektionsblock 11 und einen Speicherblock 12 für selektierte Fluidsegmente. Die genannten Funktionsmodule 5 bis 12 können je nach Bedarf aus einzelnen, physikalisch getrennten Modulen gebildet sein oder zu mehreren oder alle in einer jeweiligen gemeinsamen physikalischen Einheit zusammengefasst, d.h. in eine solche integriert sein. Die Abmessungen solcher Module bzw. Einheiten liegen typischerweise zwischen 3mm bis zu 1.000mm Kantenlänge. Insbesondere können nur eines dieser Funktionsmodule, ein Teil derselben oder alle diese Funktionsmodule 5 bis 12 in ein Mikrofluidikanalyse-Bauelement mit geeigneter Kapillarstruktur integriert sein. Die Kapillarstruktur kann in an sich bekannter Weise realisiert sein, insbesondere mit rechteckigem, V-förmigen oder halbkreisförmigem Kapillarquerschnitt. Dabei können die lateralen Abmessungen und Kapillartiefen zwischen verschiedenen Kapillaren der Kapillarstruktur oder auch innerhalb derselben Kapillare von typisch 1µm bis etwa 10mm oder auch etwas darüber variieren.

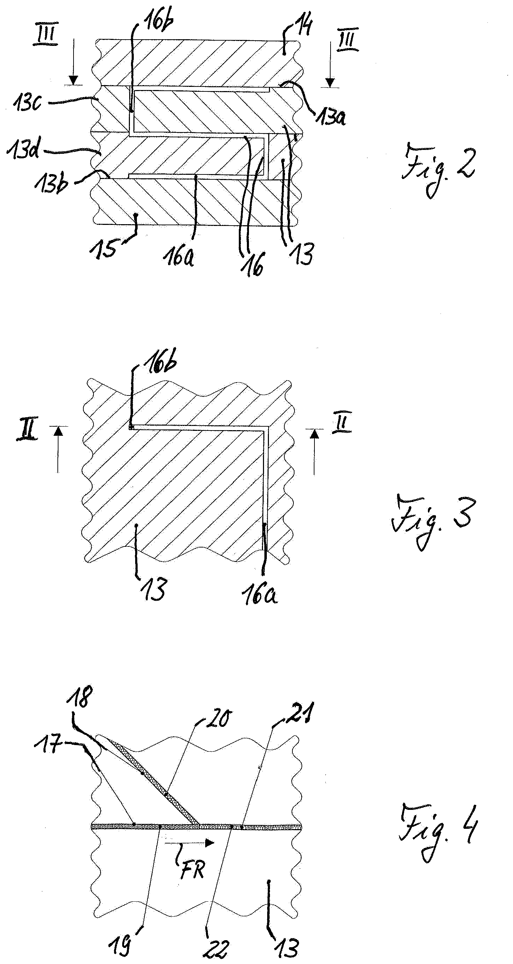

In ebenfalls an sich bekannter Weise kann das Kapillarsystem zweidimensional in einer Ebene eines typischerweise schichtartigen Aufbaus des Mikrofluidikanalyse-Bauelements oder alternativ dreidimensional ausgeführt werden. Im letzteren Fall erstreckt sich das Kapillarsystem auch in der Richtung senkrecht zu den Schichtebenen. Die Fig. 2 und 3 veranschaulichen in einem entsprechenden Ausschnitt eines Mikrofluidanalyse-Bauelements eine solche dreidimensionale Kapillarstruktur. Wie daraus ersichtlich, beinhaltet das Mikrofluidikanalyse-Bauelement in diesem Fall ein Kapillarsubstrat 13, ein Deckelsubstrat 14 angrenzend an eine Deckseite 13a des Kapillarsubstrats 13 sowie ein Bodensubstrat 15 angrenzend an eine Bodenseite 13b des Kapillarsubstrats 13. Im gezeigten Beispiel ist das Kapillarsubstrat 13 zweilagig aus einer oberen Lage 13c und einer unteren Lage 13d gebildet, in alternativen Ausführungen kann es einteilig gebildet sein oder aus mehr als zwei Schichtlagen bestehen. Im gezeigten Beispiel handelt es sich um plane Substrate, alternativ sind aber auch nichtplanare Substrate möglich.

In den Schichtaufbau ist eine Kapillarstruktur 16 integriert, die eine oder mehrere Kapillaren 16a in einer oder mehreren zu den Schichtsubstraten 13, 14, 15 parallelen Ebenen und verbindende Fluidpfade 16b umfasst, die Verbindungen zu den parallel zu den Schichtebenen verlaufenden Kapillaren 16a herstellen. Im gezeigten Beispiel sind die Verbindungspfade 16b von Durchgangslöchern gebildet, die sich vertikal, d.h. senkrecht zu den Schichtebenen, durch das Kapillarsubstrat 13 bzw. durch eine oder mehrere seiner Schichtlagen 13c, 13b hindurch erstrecken. Alternativ können die Verbindungspfade von Schläuchen gebildet sein, die außerhalb des Schichtaufbaus, z.B. an Seitenkanten des Schichtaufbaus, die ebenenparallelen Kapillaren 16a miteinander verbinden.

Fig. 4 veranschaulicht schematisch einen in ein Mikrofluidikanalyse-Bauelement integrierten Funktionsteil zur Fluidkompartimentierung, worunter die Bildung von getrennten Reaktionsräumen innerhalb eines Fluidstromes durch Fluid-Fluid-Segmente zu verstehen ist, beispielsweise durch stabile Tropfenbildung. Das Kompartimentierungsmodul kann insbesondere in das Mikrofluidikanalyse-Bauelement mit einem dreidimensionalen Kapillarsystem nach Art der Fig. 2 und 3 oder alternativ mit einem zweidimensionalen Kapillarsystem integriert sein. In diesem Fall beinhaltet das Kapillarsystem eine erste Kapillare 17 und eine zweite Kapillare 18, die in die erste Kapillare 17 einmündet. In die erste Kapillare 17 wird ein erstes Fluid 19 eingespeist, z.B. ein zu analysierendes Fluid. In die andere Kapillare 18 wird ein zweites Fluid 20 eingespeist, z.B. ein Trennfluid. Beide Kapillaren 17, 18 verlaufen ebenenparallel zum Kapillarsubstrat 13. Im gezeigten Beispiel mündet die zweite Kapillare 18 unter einem spitzen Winkel zur Fluidströmungsrichtung FR der ersten Kapillare 17 in die erste Kapillare.

Charakteristischerweise erfolgt vorliegend die Fluidkompartimentierung durch druckimpulsgesteuerte Einspeisung bzw. Führung jedes der beiden Fluide 19, 20 in ihren zugehörigen Kapillaren 17, 18. Die dafür erforderlichen Druckimpulse werden z.B. mittels elektronischer Steuerung von Magnet- oder Piezoventilen realisiert, wobei die Öffnungszeiten der Ventile individuell im Bereich von einigen Sekunden bis zu Mikrosekunden variiert werden. Dabei können Druckunterschiede der beteiligten Fluide 19, 20 zwischen etwa 10bar und etwa 1mbar oder weniger umgesetzt werden. Die Druckimpulse für das eine Fluid 19 einerseits und das andere Fluid 20 andererseits werden geeignet aufeinander abgestimmt, so dass im Kapillarweg hinter der Einmündungsstelle der Kapillare 18 in die Kapillare 17 bei Verwendung zweier nicht mischbarer Flüssigkeiten, wie beispielsweise ein zu analysierendes Fluid auf Wasserbasis und ein zu Trennzwecken dienendes Öl, zugehörige Fluidgrenzflächen entstehen bzw. beibehalten werden und sich auf diese Weise getrennte Fluid-Fluid-Segmente in Form von Kompartimentsegmenten 21 des zu analysierenden Fluids und Trennsegmenten 22 mit dem Trennfluid bilden. Das Volumen der einzelnen Segmente 21, 22 kann individuell zwischen einigen Millilitern bis zu einem oder wenigen Nanolitern eingestellt werden. Jedes Segment 21, 22 kann als ein Tropfen bzw. ein abgeschlossenes Reagenzvolumen betrachtet werden. Je nach Anwendung können dispersionsfreie Flüssigkeitstransporte oder kontrollierte Emulsionen realisiert werden, indem die Kapillargeometrien, die verwendeten Flüssigkeiten und die zugehörigen Prozessparameter entsprechend gewählt werden, wie sich für den Fachmann versteht.

Im gezeigten Beispiel befinden sich die ebenenparallelen Kapillarabschnitte 16a sowohl zwischen den beiden Kapillarsubstrat-Schichtlagen 13c, 13d im Inneren des Kapillarsubstrats 13 als auch an der Grenzfläche des Kapillarsubstrats 13 mit dem Deckelsubstrat 14 und an der Grenzfläche des Kapillarsubstrats 13 mit dem Bodensubstrat 15. Dabei sind die äußeren Kapillarabschnitte jeweils an den Außenseiten des Kapillarsubstrats 13 ausgebildet und werden vom Deckelsubstrat 14 bzw. Bodensubstrat 15 abgedeckt. Alternativ können diese äußeren Kapillaren ganz oder teilweise durch entsprechende Vertiefungen im Deckelsubstrat 14 bzw. im Bodensubstrat 15 gebildet sein. Die Erfindung umfasst im Übrigen auch Ausführungsformen, bei denen entweder das Deckelsubstrat oder das Bodensubstrat fehlt und äußere Kapillaren des Kapillarsubstrats dann nur angrenzend an das Bodensubstrat bzw. das Deckelsubstrat vorhanden sind.

Im Übrigen können für die Fluidführung im Kapillarsystem gemäß Fig. 4 ebenso wie in den übrigen erwähnten Kapillarsystemen und deren Teilen an sich bekannte Fluidführungsmittel verwendet werden, was daher hier keiner näheren Erläuterung bedarf. Die spezifische Druckimpulssteuerung kann insbesondere im Steuerungsteil der Anlage von Fig. 1 implementiert sein und hier insbesondere in der zur Fluidhandhabung dienenden Steuereinheit 4, ggf. unterstützt durch den Steuerungssoftwareteil 2.

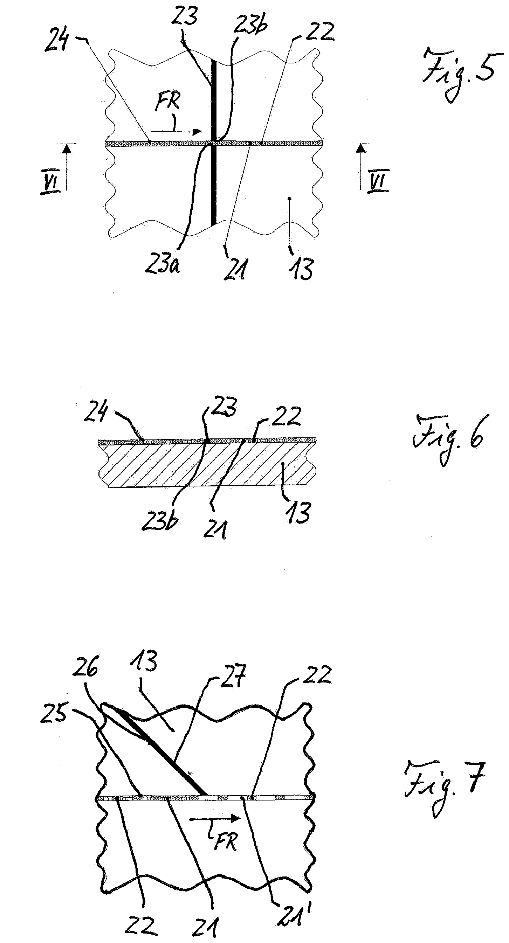

Die Fig. 5 und 6 veranschaulichen einen Sensormodulteil, wie er integraler Bestandteil eines Mikrofluidikanalyse-Bauelements nach Art der Fig. 2 bis 4 sein kann, beispielsweise zur Realisierung eines der beiden Fluidanalyseblöcke 7, 10 in der Anlage von Fig. 1. Der in den Fig. 5 und 6 schematisch gezeigte Sensorteil beinhaltet einen optischen Sensor mit einem in das Kapillarsystem integrierten optischen Sensorelement 23 in Form eines Lichtwellenleiters oder eines anderen linienförmigen Drahtmaterials aus einem optisch leitenden Werkstoff. Das linienförmige optische Sensorelement hat typischerweise einen Durchmesser von höchstens etwa 1mm. Mit Hilfe des optischen Sensorelements 23 kann ein in einer Analysekapillare 24 geführtes, zu analysierendes Fluid innerhalb der Kapillare 24 durch Anregung, Dämpfung und/oder Energietransfer hinsichtlich seiner Fluoreszenzkonzentration im Bereich von ca. 1mM bis ca. 1nM analysiert werden. Zusätzlich ist durch das optische Sensorelement 23 eine Aussage über die Polarisation, Lebensdauer, Lichtdurchlässigkeit, Absorption und/oder Streuung des Fluids möglich. Das zu analysierende Fluid wird in der Kapillare 24 in den oben zur Fig. 4 erwähnten einzelnen Kompartimenten 21 geführt, die voneinander durch die Trennsegmente 22 getrennt sind.

Charakteristischerweise verläuft das linienförmige Sensorelement 23, wie gezeigt, in der gleichen Ebene wie die fluidführende Kapillare 24, wobei sie diese kreuzt, z.B. unter einem rechten Winkel, und mit jeweils einem Fluidkontaktende 23a, 23b bündig zur betreffenden Kapillarseitenwand mit freiem Kontakt zum Kapillarhohlraum endet. Dadurch steht das optische Sensorelement 23 im Betrieb in direktem Kontakt mit dem in der Kapillare 24 geführten, zu analysierenden Fluid. Alternativ zum bündigen Abschließen mit der Kapillarseitenwand können die Fluidkontaktenden 23a, 23b des Sensor-elements 23 mit einer definiert eingestellten Länge von z.B. einigen Mikrometern in den Hohlkanal der Kapillare 24 hineinragen. Das linienförmige optische Sensorelement 23 ist durch Kleben, Gießen, Abscheiden, Drucken, Schmelzen oder durch eine andere herkömmliche Technik fest und fluiddicht mit dem Kapillarsubstrat 13 verbunden. Die mit dem Sensorelement 23 unter der Steuerung beispielsweise des Messcomputers 3 von Fig. 1 durchgeführten optischen Messungen können z.B. mit Abtastfrequenzen größer als 100Hz erfolgen.

Im gezeigten Beispiel erstreckt sich das Sensorelement 23 beidseits der Kapillare 24 zu dieser hin und von dieser weg. In alternativen Ausführungsformen kann das Sensorelement auch nur aus einem zur Kapillare hinführenden linienförmigen Element oder aus einem von der Kapillare wegführenden linienförmigen Element bestehen. Unter der Charakterisierung, dass das Sensorelement mit seinem jeweiligen Fluidkontaktende bündig zur Kapillarseitenwand mit freiem Kontakt zum Kapillarhohlraum endet, ist vorliegend auch der Fall zu verstehen, dass die Kapillare eine seitliche Ausbuchtung oder ein seitlich abgehendes Sackloch bzw. einen entsprechenden Blindkanal aufweist, bis zu dem hin sich das Sensorelement mit seinem Fluidkontaktende erstreckt, ohne sich bis ganz zur Höhe des übrigen Hohlkanals erstrecken zu müssen. Wesentlich ist insoweit jeweils nur, dass das Sensorelement mit seinem Fluidkontaktende in direktem Kontakt zum Fluid in der Kapillare steht.

Während im gezeigten Beispiel der gesamte gezeigte Abschnitt des linienförmigen Sensorelements 23 in der Ebene der Kapillare 24 liegt, kann in alternativen Ausführungsformen ein von der Kapillare beabstandeter Teil des Sensorelements außerhalb dieser Ebene liegen. Insoweit ist es jeweils nur wichtig, dass das Fluidkontaktende selbst und vorzugsweise auch noch ein daran anschließender Teil des linienförmigen Sensorelements in der Ebene der zugeordneten Kapillare liegt.

Alternativ zu dem erwähnten optischen Sensorelement kann analog ein linienförmiges elektrisches Sensorelement verwendet werden, das hierzu entsprechend aus einem elektrisch leitenden Drahtmaterial, wie einem Metall oder einem elektrisch leitenden Verbundwerkstoff, besteht. Auch in diesem Fall kann das elektrisch leitende Sensorelement mit freien Fluidkontaktenden direkten Kontakt zum zu analysierenden, durch die Kapillare geführten Fluid haben, indem diese Fluidkontaktenden wiederum bündig mit der Kapillarseitenwand abschließen oder mit einer definierten Länge von z.B. einigen Mikrometern in den Kapillarhohlkanal hineinragen. Ein solches linienförmiges, elektrisch leitendes Sensorelement hat typischerweise einen Durchmesser von höchstens etwa 1mm und ermöglicht im Zusammenwirken mit einer geeigneten Auswerteelektronik, wie sie z.B. im Messcomputer 3 von Fig. 1 implementiert sein kann, eine Bestimmung der elektrischen Leitfähigkeit des zu analysierenden Fluids im Bereich von bis zu etwa 200mS. Der spezifische Widerstand des zu analysierenden Fluids kann im Bereich von ca. 1mΩ bis ca. 1MΩ ermittelt bzw. aufgelöst werden. Das elektrisch leitende Drahtmaterial ist durch Kleben, Gießen, Abscheiden, Drucken oder Schmelzen oder eine andere geeignete Technik fest und fluiddicht mit dem Kapillarsubstrat 13 verbunden. Die Messungen können z.B. wiederum mit Abtastfrequenzen von mehr als 100Hz durchgeführt werden.

Fig. 7 veranschaulicht schematisch und ausschnittweise ein Fluidzumischungsmodul, wie es wiederum integraler Bestandteil eines Mikrofluidikanalyse-Bauelements nach Art der Fig. 2 bis 4 sein kann, insbesondere zur Realisierung des Fluideinspritzungs-Modulblocks 8 in der Anlage von Fig. 1. Die Kapillarstruktur des Fluidzumischungsmoduls ähnelt derjenigen des Kompartimentierungsmoduls von Fig. 4, indem sie eine erste Kapillare 25 und eine zweite Kapillare 26 umfasst, die z.B. unter einem spitzen Winkel zur Fluidströmungsrichtung FR der ersten Kapillare 25 in die erste Kapillare 25 einmündet. In der ersten Kapillare 25 wird vor der Einmündungsstelle ein zuvor bereits kompartimentiertes Fluid geführt, d.h. der dortige Fluidstrom besteht aus den einzelnen Kompartimentsegmenten 21 und den diese separierenden Trennsegmenten 22, wie er vom Kompartimentierungsmodul der Fig. 4 erzeugt wird. In die andere Kapillare 26 wird ein zuzumischendes Fluid 27 eingespeist.

Die Einspeisung des zuzumischenden Fluids 27 erfolgt wiederum druckimpulsgesteuert derart, dass das zuzumischende Fluid an der Kapillarmündungsstelle spezifisch in die Kompartimentierungssegmente 21 injiziert wird, die durch die Trennsegmente 22 separiert bleiben. Hinter der Einmündungsstelle liegen hierdurch Kompartimentsegmente 21' vor, die zusätzlich zum Eintrittsfluid das zugemischte Fluid enthalten und weiterhin durch die Trennsegmente 22 voneinander getrennt sind. Mit Drücken bis zu ca. 10bar kann durch Variation der Öffnungszeiten zugeordneter Ventile zwischen ca. 1µs und einigen Sekunden das einzuspritzende Zumischfluidvolumen im Bereich zwischen ca. 1nl und ca. 1ml gezielt eingestellt werden. Die Ventile können dabei wiederum extern angeordnet oder in das Kapillarsystem integriert sein. Es versteht sich, dass die Fluidzumischung je nach Bedarf in jedes Kompartimentsegment oder alternativ nur in ausgewählte Kompartimentsegmente des Eintrittsfluidstroms vor der Zumischungsstelle zugegeben werden kann, indem die Druckimpulssteuerung entsprechend eingestellt wird.

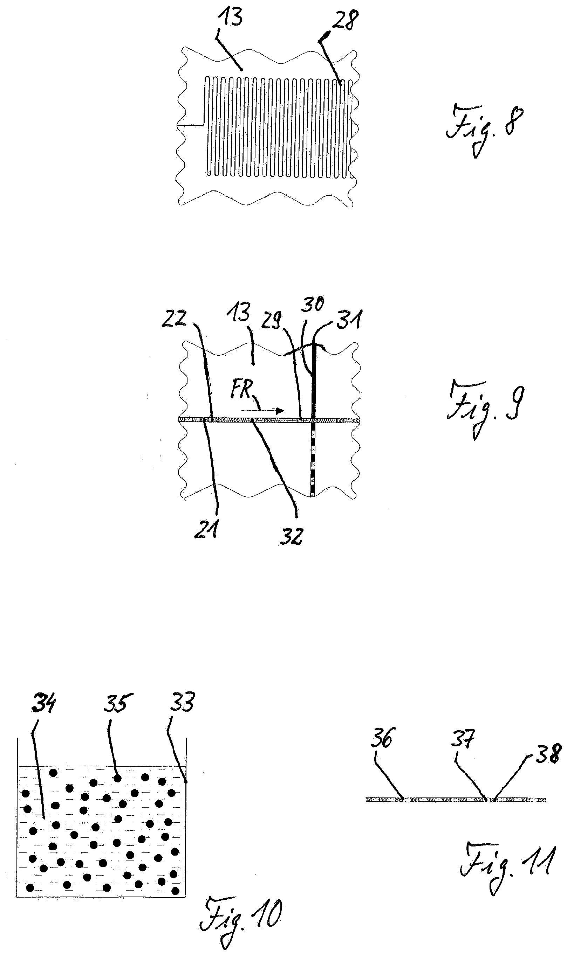

Fig. 8 veranschaulicht ein Inkubationsmodul, wie es in ein Mikrofluidikanalyse-Bauelement integriert oder diesem extern zugeordnet sein kann, beispielsweise zur Verwendung für die Inkubationsfunktionsblöcke 6, 9 in der Anlage von Fig. 1. Im gezeigten Beispiel beinhaltet das Inkubationsmodul eine mäanderförmige Kapillarstruktur 28 im Kapillarsubstrat 13 bzw. einer Grenzfläche desselben zu einem Deckel- oder Bodensubstrat. In dieser mäanderförmigen Kapillarstruktur 28, alternativ sind auch schlauchförmige Inkubationsstrukturen verwendbar, können bis zu 107 Fluidsegmente über mehrere Stunden bis Tage gelagert werden. Dabei bleibt die Zuordnung zwischen jedem Fluidsegment zu seinen Prozessparametern sowie zu Informationen hinsichtlich Konzentrationen und eingespritzten Reagenzien erhalten. Die Umgebungstemperatur des Inkubationsmoduls kann zur Steuerung chemischer oder biologischer Reaktionen geregelt werden. Bei Bedarf kann die Umgebung des Inkubationsmoduls oder die Kapillarstruktur mit Prozessgasen angereichert werden. Die Verweildauer jedes Segments im Inkubationsmodul wird mittels vorzugsweise elektronisch gesteuerter Ventile individuell eingestellt.

Fig. 9 veranschaulicht schematisch und ausschnittweise ein Selektionsmodul, wie es in ein Mikrofluidikanalyse-Bauelement integriert sein kann, beispielsweise zur Bereitstellung des Selektionsfunktionsblocks 11 in der Anlage von Fig. 1. Das Selektionsmodul weist eine Kapillarstruktur am bzw. im Kapillarsubstrat 13 auf, die eine das analysierte Fluid führende Kapillare 29 und eine diese kreuzende Selektionsfluidkapillare 30 umfasst, in die wiederum druckgesteuert ein Separationsfluid 31 eingespeist wird. Der analysierte Fluidstrom in der Kapillare 29 besteht aus der bereits mehrfach erwähnten Abfolge von Kompartimentsegmenten 21 und Trennsegmenten 22. Der Kreuzungspunkt der beiden Kapillaren 29, 30 bildet eine Separationsstelle, an der ein vorgebbares, ausgewähltes, zu selektierendes Fluidsegment 32 durch einen entsprechenden Druckimpuls auf das Selektionsfluid 31 aus der Kapillare 29 heraus in die Selektionsfluidkapillare 30 hinein gedrückt wird. In der Selektionsfluidkapillare 30 hinter der Kreuzungs- bzw. Separationsstelle liegen folglich sequentiell die selektierten Fluidsegmente getrennt durch ein jeweiliges Selektionsfluidsegment vor. Für die Selektion der Fluidsegmente erfolgt die Selektionsfluideinspeisung über geregelte Druckimpulse zwischen ca. 0,1bar und ca. 10bar. Diese Druckimpulse können z.B. durch Öffnungszeiten elektronisch gesteuerter Ventile im Bereich von ca. 1µs bis etwa 10s oder darüber erzeugt werden. Das Volumen des so selektierten Fluidsegments liegt typisch im Bereich von ca. 1nl bis ca. 1ml.

Die Fig. 10 und 11 veranschaulichen zwei Realisierungsmöglichkeiten eines Speichermoduls, wie es für den Speicherungsfunktionsblock 12 in der Anlage von Fig. 1 verwendbar ist. Fig. 10 zeigt hierfür einen tankförmigen Speicherbehälter 33, der mit einem flüssigen Speichermedium 34 gefüllt ist, welches selektierte Fluidsegmente 35 schwimmend bzw. schwebend aufnimmt. Da die selektierten Fluidsegmente 35 auf diese Weise ungeordnet im Sammelbehälter 33 dispensiert sind, stellt dies eine Speichermethode ohne Beibehaltung der Segmentzuordnung dar.

Alternativ zeigt Fig. 11 eine Speichermethode, bei welcher die Segmentzuordnung mit den dazugehörigen Prozessparametern sowie Informationen zu Konzentrationen und eingespritzten Reagenzien beibehalten wird. Dazu dient ein Speicherschlauch 36, in welchem selektierte Fluidsegmente 37 sequentiell und durch Trennsegmente 38 voneinander getrennt aufgenommen sind. Die Segmente 37 können dabei in einen zuvor bestimmten Platz einer Mikrotiterplatte dispensiert werden.

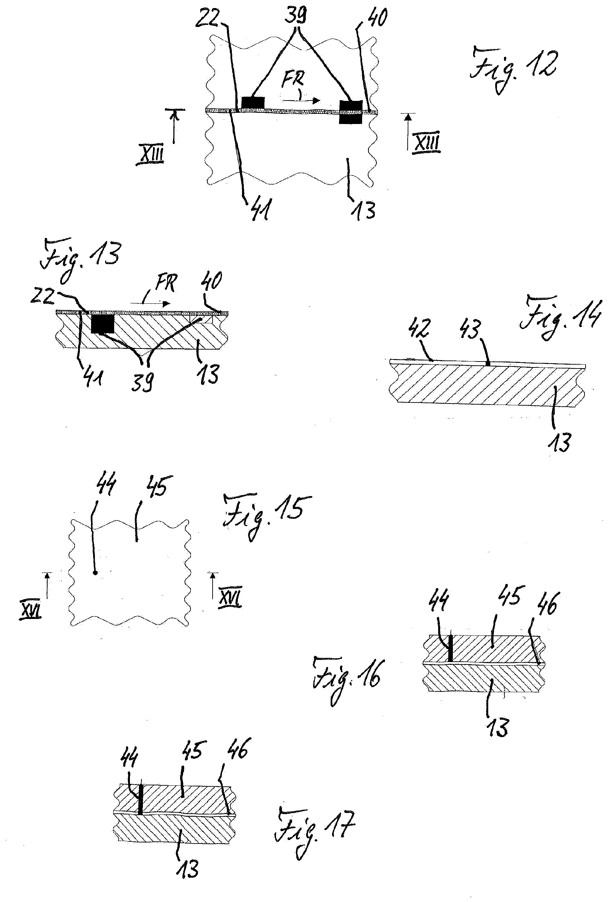

Die Fig. 12 und 13 veranschaulichen schematisch einen Ausschnitt eines Mikrofluidikanalyse-Bauelements mit einer Kapillarstruktur, der magnetische Spulen zugeordnet sind, die beispielsweise als Sensoren oder Aktoren fungieren können und in bzw. am Kapillarsubstrat 13 integriert sind. Im gezeigten Beispiel sind zwei Magnetspulen 39 mit vorgegebenem Abstand in Fluidströmungsrichtung hintereinander an einer Kapillare 40 angeordnet, die wiederum zur Führung des aus einzelnen, durch Trennsegmente 22 voneinander separierten Kompartiment-Fluidsegmenten 41 dient. Die beiden Spulen 39 sind im gezeigten Fall an zwei um 90° um eine Längsachse der Kapillare 40 versetzten Seiten direkt an der Kapillare 40 angeordnet. Mit Spulenabmessungen und Spulenhöhen von kleiner ca. 6mm ist es möglich, mit solchen Spulen 39 Induktionen von ca. 1nH bis ca. 10mH bei Schaltzyklen zwischen ca. 0,01Hz und ca. 100kHz zu erzeugen. Durch Verwenden magnetischer Partikel im in der Kapillare 40 geführten Fluid können auf diese Weise die Strömungsverhältnisse und Prozessbedingungen innerhalb der Kapillarstruktur gesteuert bzw. kontrolliert werden.

Fig. 14 veranschaulicht in einer Schnittansicht ähnlich Fig. 6 einen charakteristischen Verfahrensschritt des erfindungsgemäßen Verfahrens zur Herstellung eines Mikrofluidikanalyse-Bauelements. Dieser Verfahrensschritt beinhaltet die Erzeugung der Kapillarstruktur, in Fig. 14 speziell einer gezeigten Kapillare 42, durch einen spanenden Bearbeitungsschritt des Kapillarsubstrats 13, je nach Anwendungsfall alternativ oder zusätzlich eine spanende Bearbeitung des Deckelsubstrats und/oder des Bodensubstrats. Durch dieses spanende Herstellen der Kapillare 42 lässt sich außerdem ein die Kapillare 42 kreuzendes oder in diese hineinragendes, linienförmiges, optisches oder elektrisches Sensorelement 43 strukturieren. Unter Strukturierung des Sensorelements 43 ist hierbei die Erzeugung eines Fluidkontaktendes des Sensorelements zu verstehen, das fluchtend zu einer Seitenwand der Kapillare 42 liegt oder sich in einer vorgebbaren Länge in den Hohlkanal hinein oder in einem vorgegebenen Abstand gegenüber diesem Hohlkanal zurückversetzt bis zu einer Ausbauchung oder einem Blindabzweig des Hohlkanals erstreckt. Diese Strukturierung kann das Durchtrennen eines beidseitig der Kapillare 42 verlaufenden Sensorelements oder das Abtrennen eines sich nur einseitig zur Kapillare 42 hin oder von dieser weg erstreckenden Sensorelements beinhalten. Dazu braucht das Sensorelement 43 nicht aus dem gleichen oder einem ähnlichen Material wie das Kapillarsubstrat 13 zu bestehen, die spanende Erzeugung der Kapillarstruktur und des Sensorelement-Fluidkontaktendes lassen vielmehr eine hohe Flexibilität in der Wahl der Materialien für das Kapillarsystem 13 einerseits und das Sensorelement 43 andererseits zu.

Die Fig. 15 bis 17 veranschaulichen eine bereits oben erwähnte, vorteilhafte Integration eines fluidsteuernden Ventils 44 in ein Deckelsubstrat 45 eines Schichtaufbaus mit Kapillarsubstrat 13 und Deckelsubstrat 15. Das Ventil 44 besteht aus einem duktilen Material, wie Silikon, und ist in eine vertikale Durchgangsöffnung des Deckelsubstrats 45 derart eingebracht, dass es je nach Anregungszustand eine darunterliegende Kapillare 46 offen hält, wie in Fig. 16 gezeigt, oder schließt, wie in Fig. 17 gezeigt. Durch entsprechende Ansteuerung des Ventils 44 kann folglich der Fluidstrom durch die Kapillare 46 hindurch in einer gewünschten Weise von außen gesteuert werden.

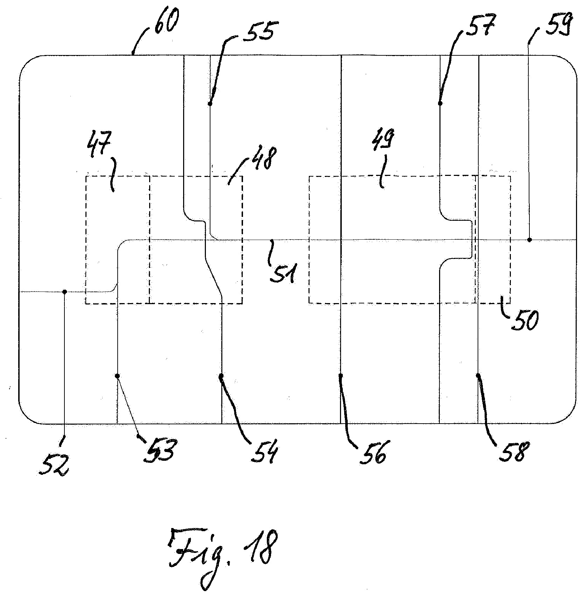

Fig. 18 veranschaulicht schematisch in einer Draufsicht ein einteiliges Mikrofluidikanalyse-Bauelement 60, das ein Kompartimentierungsmodul 47, ein Fluidzumischungsmodul 48, ein Segmentanalysemodul 49 und ein Selektionsmodul 50 integriert enthält. Eingangsseitig wird dem Kompartimentierungsmodul 47 über je eine zugehörige Kapillare 52, 53 eine Trennflüssigkeit bzw. eine wässrige Lösung als zu analysierendes Fluid zugeführt. Das zu analysierende Fluid verlässt das Kompartimentierungsmodul 47 in Form der durch die Trennsegmente voneinander separierten Kompartimente in einer Kapillare 51. Dem Fluidzumischungsmodul 48 ist vor der Zumischstelle ein linienförmiges, vorzugsweise elektrisches Sensorelement 54 zugeordnet, das als ein erster Kompartimentdetektor fungiert. Das zuzumischende Fluid wird dem Fluidzumischungsmodul 48 über eine entsprechende Zumischfluidkapillare 55 zugeführt. Durch den Kompartimentdetektor 54 wird die Lage und Abfolge der Fluidkompartimente in der Kapillare 51 detektiert, und abhängig davon wird das zuzumischende Fluid druckimpulsgesteuert in die Kapillare 51 zugegeben.

Dem Segmentanalysemodul 49 ist ein linienförmiges Sensorelement 56 zugeordnet, bei dem es sich insbesondere um ein optisches oder elektrisches Sensorelement der oben erwähnten Art handeln kann, das der Analyse des kompartimentierten Fluids dient. An der Ausgangsseite des Segmentanalysemoduls 49 befindet sich ein zweiter Kompartimentdetektor 57, um dort wiederum die Lage und Abfolge der Fluidkompartimente zu detektieren. Dem anschließenden Selektionsmodul 50 ist eine die Kapillare 51 kreuzende Separationsfluidkapillare 58 zugeordnet, in die vor der Kapillare 51 ein Selektionsfluid druckimpulsgesteuert in Abhängigkeit von der Detektion der Fluidsegmente durch den zweiten Kompartimentdetektor 57 eingespeist wird und das stromabwärts der Kreuzungsstelle mit der Kapillare 51 die auf diese Weise selektierten Fluid-segmente unter gegenseitiger Trennung durch entsprechende Separationsfluidsegmente aufnimmt. Über einen Auslass 59 verlässt dann das übrige Fluid in der Kapillare 51 ohne die separierten Fluidsegmente das Mikrofluidikanalyse-Bauelement 60.

Es versteht sich, dass in alternativen Ausführungsformen ein erfindungsgemäßes Mikrofluidikanalyse-Bauelement nur einen Teil der vier in Fig. 18 gezeigten Module 47, 48, 49, 50 oder eine beliebige andere Kombination der Module bzw. Funktionsblöcke umfassen kann, wie sie Bestandteil des Mikroreaktors 1 in der Analyseanlage von Fig. 1 sind.

Das erfindungsgemäße Mikrofluidikanalyse-Bauelement eignet sich für diverse Analyseanwendungen und Applikationen wie Drug-Screening, Enzym-, Zell- und/oder Proteinoptimierung, Antikörper-Optimierung bzw. -Synthetisierung und Diagnostik.

## Patentansprüche

1. Mikrofluidikanalyse-Bauelement mit
- einem Kapillarsubstrat (13),
- einem Deckelsubstrat (14) angrenzend an eine Deckseite des Kapillarsubstrats und/oder einem Bodensubstrat (15) angrenzend an eine Bodenseite des Kapillarsubstrats,
- einer Kapillarstruktur (16) mit mindestens einer einen Hohlkanal bildenden Kapillare im Inneren des Kapillarsubstrats und/oder an der Grenzfläche des Kapillarsubstrats mit dem Deckelsubstrat und/oder an der Grenzfläche des Kapillarsubstrats mit dem Bodensubstrat und
- Fluidführungsmitteln zum Hindurchführen eines Fluids durch die Kapillarstruktur,
**dadurch gekennzeichnet, dass**
- die Fluidführungsmittel einen Fluidkompartimentierungs-Funktionsteil zur druckimpulsgesteuerten Fluidkompartimentierung aufweisen, der zwei nicht mischbare Fluide (19, 20) in zwei an einer Einmündungsstelle zusammengeführten Kapillaren (17, 18) der Kapillarstruktur führt und an der Einmündungsstelle in aufeinanderfolgende getrennte Fluid-Fluid-Segmente (21, 22) kompartimentiert.

2. Mikrofluidikanalyse-Bauelement nach Anspruch 1, weiter **dadurch gekennzeichnet, dass** in das Mikrofluidikanalyse-Bauelement ein linienförmiges Sensorelement (23) integriert ist, das sich zu einer Kapillare der Kapillarstruktur hin und von dieser weg erstreckt und jeweils mit einem Fluidkontaktende (23a, 23b) sowie mindestens einem angrenzenden Teil von dessen Zuführung in einer gleichen, zum Kapillarsubstrat parallelen Ebene wie die Kapillare liegt, wobei es mit seinen beiden Fluidkontaktenden in Kontakt mit dem in der Kapillare geführten Fluid fluchtend zu einer Seitenwand der Kapillare im Kapillarsubstrat abschließt oder sich in deren Hohlkanal hinein erstreckt.

3. Mikrofluidikanalyse-Bauelement nach Anspruch 2, weiter **dadurch gekennzeichnet, dass** das linienförmige Sensorelement ein optisch leitendes Drahtmaterial oder ein elektrisch leitendes Drahtmaterial beinhaltet.

4. Mikrofluidikanalyse-Bauelement nach einem der Ansprüche 1 bis 3, weiter **dadurch gekennzeichnet, dass** die Fluidführungsmittel zur Bereitstellung der Druckimpulse mit Drücken bis zu 10bar und Impulsbreiten zwischen 1µs und 10s eingerichtet ist.

5. Mikrofluidikanalyse-Bauelement nach einem der Ansprüche 1 bis 4, weiter **dadurch gekennzeichnet, dass** die Fluidführungsmittel wenigstens ein in das Deckelsubstrat oder das Bodensubstrat integriertes, ansteuerbares Ventil (44) zum Öffnen und Schließen einer Kapillare der Kapillarstruktur aufweisen.

6. Mikrofluidikanalyse-Bauelement nach einem der Ansprüche 1 bis 5, weiter **dadurch gekennzeichnet, dass** es
- wenigstens zwei Module aus der Gruppe integriert enthält, die aus einem Kompartimentierungsmodul, einem Fluidzumischungsmodul, einem Inkubationsmodul, einem Fluidanalysemodul und einem Selektionsmodul besteht, und/oder
- einen Speicherschlauch (36) aufweist, in welchem selektierte Fluidsegmente (37) der Fluid-Fluid-Segmente sequentiell und durch Trennsegmente (38) voneinander getrennt aufgenommen sind.

7. Mikrofluidikanalyse-Bauelement nach einem der Ansprüche 1 bis 6, weiter **dadurch gekennzeichnet, dass** es ein Kompartimentierungsmodul und/oder ein Fluidzumischungsmodul mit einer ersten Kapillare (17, 25) und einer in diese einmündenden zweiten Kapillare (18, 26) beinhaltet und die Fluidführungsmittel zum druckgesteuerten Führen eines ersten Fluids in der ersten Kapillare und eines zweiten Fluids in der zweiten Kapillare eingerichtet sind.

8. Mikrofluidikanalyse-Bauelement nach Anspruch 6 oder 7, weiter **dadurch gekennzeichnet, dass** es ein Selektionsmodul mit einer Analysefluidkapillare (29) und einer diese kreuzenden Selektionsfluidkapillare (30) aufweist und die Fluidführungsmittel zum selektiven Auskoppeln einzelner Analysefluidsegmente aus der Analysefluidkapillare durch entsprechendes druckgesteuertes Führen eines Selektionsfluids (31) in der Selektionsfluidkapillare eingerichtet sind.

9. Mikrofluidikanalyse-Bauelement nach Anspruch 1, weiter **dadurch gekennzeichnet, dass** es eine oder mehrere magnetische Spulen als ein jeweiliger Sensor oder Aktor aufweist, die in oder am Kapillarsubstrat integriert ist/sind.

10. Verfahren zur Herstellung eines Mikrofluidikanalyse-Bauelements nach einem der Ansprüche 1 bis 9, **dadurch gekennzeichnet, dass** wenigstens eine Kapillare der Kapillarstruktur durch einen spanenden Bearbeitungsschritt des Kapillarsubstrats und/oder des Deckelsubstrats und/oder des Bodensubstrats gebildet wird.

11. Verfahren nach Anspruch 10, weiter **dadurch gekennzeichnet, dass** durch den spanenden Bearbeitungsschritt, mit dem die entsprechende Kapillare gebildet wird, ein zuvor gebildetes, die Kapillare kreuzendes oder in die Kapillare hineinragendes, linienförmiges Sensorelement im Bereich der Kapillare aufgetrennt oder abgetrennt wird.

## Claims

1. Microfluidic analysis device, comprising
- a capillary substrate (13),
- a cover substrate (14) adjacent to a deck side of the capillary substrate and/or a bottom substrate (15) adjacent to a bottom side of the capillary substrate,
- a capillary structure (16) with at least one capillary, forming a hollow channel, within the interior of the capillary substrate and/or at the interface of the capillary substrate with the cover substrate and/or at the interface of the capillary substrate with the bottom substrate, and
- fluid-conducting means for conducting a fluid through the capillary structure,
**characterized in that**
- the fluid-conducting means include a fluid compartmenting functional part for pressure pulse-controlled fluid compartmenting, which functional part guides two immiscible fluids (19, 20) in two capillaries (17, 18) of the capillary structure joined at a point of entry and provides compartmenting at the point of entry into successive separate fluid-fluid segments (21, 22).

2. Microfluidic analysis device according to claim 1, further **characterized in that** a linear sensor element (23) is integrated in the microfluidic analysis device, which element extends toward a capillary of the capillary structure and away from it and lies respectively with a fluid contact end (23a, 23b) and at least one adjacent part of its feed in a same plane as the capillary and parallel to the capillary substrate, wherein it finishes with its two fluid contact ends in contact with the fluid conducted in the capillary flush with a side wall of the capillary in the capillary substrate or extends into the hollow channel thereof.

3. Microfluidic analysis device according to claim 2, further **characterized in that** the linear sensor element comprises an optically conducting wire material or an electrically conducting wire material.

4. Microfluidic analysis device according to any of claims 1 to 3, further **characterized in that** the fluid conducting means are designed for providing the pressure pulses with pressures of up to 10 bar and pulse widths of between 1 µs and 10 s.

5. Microfluidic analysis device according to any of claims 1 to 4, further **characterized in that** the fluid conducting means include at least one activatable valve (44) integrated in the cover substrate or the bottom substrate for opening and closing a capillary of the capillary structure.

6. Microfluidic analysis device according to any of claims 1 to 5, further **characterized in that**
- it includes, in an integrated form, at least two modules from the group consisting of a compartmentation module, a fluid admixing module, an incubation module, a fluid analysis module and a selection module, and/or
- it includes a storage tube (36), in which selected fluid segments (37) of the fluid-fluid segments are received sequentially and separated from one another by separating segments (38).

7. Microfluidic analysis device according to any of claims 1 to 6, further **characterized in that** it includes a compartmentation module and/or a fluid admixing module with a first capillary (17, 25) and a second capillary (18, 26) entering the first capillary, and the fluid conducting means are designed for the pressure-controlled conducting of a first fluid in the first capillary and a second fluid in the second capillary.

8. Microfluidic analysis device according to claim 6 or 7, further **characterized in that** it has a selection module with an analysis fluid capillary (29) and a selection fluid capillary (30) crossing the latter, and the fluid conducting means are designed for selectively decoupling individual analysis fluid segments from the analysis fluid capillary by corresponding pressure-controlled conducting of a selection fluid (31) in the selection fluid capillary.

9. Microfluidic analysis device according to claim 1, further **characterized in that** it has one or more magnetic coils as a respective sensor or actuator which is/are integrated in or on the capillary substrate.

10. Method for manufacturing a microfluidic analysis device according to any of claims 1 to 9, **characterized in that** at least one capillary of the capillary structure is formed by a step of machining the capillary substrate and/or the cover substrate and/or the bottom substrate.

11. Method according to claim 10, further **characterized in that**, during the machining step to form the corresponding capillary, a previously formed linear sensor element that crosses the capillary or protrudes into the capillary is cut open or cut off in the region of the capillary.

## Revendications

1. Composant pour analyse microfluidique comportant
- un substrat capillaire (13),
- un substrat de couvercle (14) adjacent à un côté de couverture du substrat capillaire et/ou un substrat de base (15) adjacent à un côté de base du substrat capillaire,
- une structure capillaire (16) avec au moins un capillaire, formant un canal creux, dans l'intérieur du substrat capillaire et/ou à l'interface entre le substrat capillaire et le substrat de couvercle et/ou à l'interface entre le substrat capillaire et le substrat de base, et
- des moyens de conduite de fluide pour passer un fluide par la structure capillaire,
**caractérisé en ce que**
- les moyens de conduite de fluide présentent une partie fonctionnelle de compartimentation de fluide pour compartimenter fluide par pression pulsée, la partie fonctionnelle guide deux fluides non miscibles (19, 20) dans deux capillaires (17, 18) de la structure capillaire réunis à un point de confluence et au point de confluence réalise compartimentation desdits fluides en segments fluide-fluide successifs séparés (21, 22).

2. Composant pour analyse microfluidique selon la revendication 1, en outre **caractérisé en ce qu'**un élément capteur (23) linéaire est intégré dans le composant pour analyse microfluidique, ledit élément capteur s'étende vers et à l'écart d'un capillaire de la structure capillaire et se situe respectivement par une extrémité de contact de fluide (23a, 23b) ainsi que par au moins une partie adjacente de son alimentation dans un même plan que le capillaire et en parallèle au substrat capillaire, dans lequel ledit élément se termine avec ses deux extrémités de contact de fluide en contact avec le fluide guidé dans le capillaire aligné avec une paroi latérale du capillaire dans la structure capillaire ou s'étende vers l'intérieur du canal creux du capillaire.

3. Composant pour analyse microfluidique selon la revendication 2, en outre **caractérisé en ce que** l'élément capteur linéaire comprend un matériau de fil conducteur optique ou un matériau de fil conducteur électrique.

4. Composant pour analyse microfluidique selon l'une quelconque des revendications 1 à 3, en outre **caractérisé en ce que** les moyens de conduite de fluide sont configurés pour l'alimentation des impulsions de pression présentant des pressions jusqu'à 10 bar et des largeurs d'impulsion entre 1 µs et 10 s.

5. Composant pour analyse microfluidique selon l'une quelconque des revendications 1 à 4, en outre **caractérisé en ce que** les moyens de conduite de fluide comportent au moins une soupape (44) contrôlable intégrée dans le substrat de couvercle ou le substrat de base pour ouvrir et fermer un capillaire de la structure capillaire.

6. Composant pour analyse microfluidique selon l'une quelconque des revendications 1 à 5, en outre **caractérisé en ce qu'**il
- comporte au moins deux modules intégrés du groupe consistant en un module de compartimentation, un module de mélange de fluides, un module d'incubation, un module d'analyse de fluide et un module de sélection, et/ou
- comprend un tuyau de stockage (36), dans lequel segments de fluide sélectionnés (37) des segments fluide-fluide sont accueillis séquentiellement et isolés l'un de l'autre par des segments de séparation (38).

7. Composant pour analyse microfluidique selon l'une quelconque des revendications 1 à 6, en outre **caractérisé en ce qu'**il comporte un module de compartimentation et/ou un module de mélange de fluides avec un premier capillaire (17, 25) et un deuxième capillaire (18, 26) débouchant dans le premier et les moyens de conduite de fluide sont configurés pour conduire par pression pulsée un premier fluide dans le premier capillaire et un deuxième fluide dans le deuxième capillaire.

8. Composant pour analyse microfluidique selon la revendication 6 ou 7, en outre **caractérisé en ce qu'**il comporte un module de sélection avec un capillaire (29) de fluide d'analyse et un capillaire (30) de fluide de sélection le traversant et les moyens de conduite de fluide sont configurés pour découpler sélectivement des segments de fluide d'analyse individuels hors du capillaire de fluide d'analyse en conduisant un fluide de sélection (31) dans le capillaire de fluide de sélection par pression pulsée correspondant.

9. Composant pour analyse microfluidique selon la revendication 1, en outre **caractérisé en ce qu'**il comporte une ou plusieurs bobines magnétiques comme capteur ou acteur respectif intégrée/intégrées dans ou sur le substrat capillaire.

10. Procédé de fabrication d'un composant pour analyse microfluidique selon l'une quelconque des revendications 1 à 9, **caractérisé en ce qu'**au moins un capillaire de la structure capillaire est formé lors d'une étape d'usinage du substrat capillaire et/ou du substrat de couvercle et/ou du substrat de base.

11. Procédé selon la revendication 10, en outre **caractérisé en ce que** par le biais de l'étape d'usinage, formant le capillaire correspondant, un élément capteur linéaire formé auparavant et traversant le capillaire ou avançant dans le capillaire est découpé ou sectionné au niveau du capillaire.
